# EUROPÄISCHE PATENTSCHRIFT

(11) **EP 2 551 797 B1**
(45) Veröffentlichungstag und Bekanntmachung des Hinweises auf die Patenterteilung: **23.11.2016**
(21) Anmeldenummer: 12005252.7
(22) Anmeldetag: 17.07.2012
(51) Int. Cl.: G06K 19/08, G06K 19/10

(54) **Erzeugen und Prüfen einer Produktkennzeichnung**
Generation and checking of a product identification
Génération et verification d'une identification d'un produit

(30) Priorität: 27.07.2011 DE 102011109077
(43) Veröffentlichungstag der Anmeldung: 30.01.2013
(73) Patentinhaber: Giesecke & Devrient GmbH, 81677 München (DE)
(72) Erfinder: Fiedler, Michael, Dr., 81369 München (DE); Paul, Oliver, 85435 Erding (DE)

(56) Entgegenhaltungen:
- WO-A1-97/24699
- US-A1- 2009 283 583

## Beschreibung

Die vorliegende Erfindung betrifft ein Verfahren zum Erzeugen und Prüfen einer Produktkennzeichnung und eine Vorrichtung zum Erzeugen und Prüfen einer Produktkennzeichnung.

Zur Erkennung von gefälschten Produkten werden im Stand der Technik Kennzeichnungen verwendet, welche eine Unterscheidung zwischen Original und Fälschung ermöglichen. Diese Lösungen arbeiten in einer Klasse von Verfahren mit einem Hintergrundsystem. Das Hintergrundsystem speichert Daten von Originalprodukten und stellt die Daten auf Abfrage durch eine authorisierte Stelle, z.B. Zoll, zur Verfügung.

Bei Arzneimitteln existiert zur Kennzeichnung von Originalen eine von der Europäischen Union beschlossene individuelle Kennzeichnung. Diese individuelle Kennzeichnung weist beispielweise einen zufälligen, eindeutigen Code auf. Bisherige Verfahren haben den Nachteil, dass es zur Überprüfung einer Kennzeichnung eines Arzneimittels in der Regel einer Verbindung zu einem Hintergrundsystem bedarf. Dies ist von Seiten der Baugruppen und der Verarbeitung der notwendigen Daten und deren Übertragung relativ aufwändig und kostenintensiv.

US 2009/0283583 A1 offenbart ein System zur Authentisierung eines Artikels. Es steht eine Vielzahl von Möglichkeiten zur Implementierung des Systems zur Verfügung, wobei ein Artikel immer einen Code aufweist, wobei der Code auf den Artikel aufgebracht ist. Der Code enthält eine Identifikation des Artikels und eine Signatur des Artikels. Die Signatur wird durch eine Analyse der äußeren oder inneren Eigenschaften des Artikels gebildet. Zur Authentisierung werden die äußeren oder inneren Eigenschaften des Gegenstands ermittelt und mit den auf den Gegenstand aufgebrachten Eigenschaften verglichen.

WO 97/24699 offenbart ein Verfahren und eine Vorrichtung zur Authentisierung von Gegenständen. In einem ersten Schritt werden die physikalischen oder chemischen Eigenschaften des Artikels bestimmt. Die Eigenschaften werden codiert und verschlüsselt. Die codierten und verschlüsselten Eigenschaften werden auf den Gegenstand zur Authentisierung aufgebracht. Um den Gegenstand später zu Authentisieren werden die physikalischen oder chemischen Eigenschaften ermittelt. Die auf dem Gegenstand aufgebrachten codierten und verschlüsselten Eigenschaften werden mit den ermittelten Eigenschaften verglichen, um die Autheritizität des Gegenstands zu bestimmten

Demzufolge ist es die Aufgabe der vorliegenden Erfindung, ein Verfahren und eine Vorrichtung vorzuschlagen, die eine Erzeugung und Prüfung einer Produktkennzeichnung erleichtern.

Diese Aufgabe wird erfindungsgemäß durch Verfahren sowie Vorrichtungen mit den Merkmalen der unabhängigen Ansprüche gelöst. Die davon abhängigen Ansprüche beschreiben vorteilhafte Ausgestaltungen und Weiterbildungen der Erfindung.

Die Erfindung offenbart ein Verfahren zum Erzeugen einer Produktkennzeichnung, wobei die Produktkennzeichnung ohne Verbindung zu einer Datenbank allein mit dem Produkt prüfbar ist, wobei mittels einer Erfassungseinrichtung mindestens eine dauerhafte, statistisch verteilte, physikalische und/oder chemische Veränderung des Produktes erfasst wird und mittels einer Verarbeitungseinrichtung eine Produktkennzeichnung aus der erfassten Veränderung erzeugt wird. Dies hat den Vorteil, dass eine Produktkennzeichnung erzeugt wird, welche mit einfachen Mitteln direkt am Produkt geprüft werden kann, ohne dass eine Verbindung zu einem Hintergrundsystem hergestellt werden muss. Ferner hat das Verfahren den Vorteil, dass aus statistisch verteilten Veränderungen eines Produktes eine Produktkennzeichnung erzeugt wird, die in möglichst stabiler Weise durch Vergleich mit dem Produkt wieder prüfbar ist.

Je mehr Merkmale verwendet werden zur Erzeugung der Produktkennzeichnung, desto stabiler und leichter nachprüfbar wird die Produktkennzeichnung.

Als Veränderung wird ein Verhältnis von mindestens zwei verschiedenen charakteristischen Merkmalen erfasst. Dies hat den Vorteil, dass nicht nur mindestens ein Merkmal allein, sondern auch sein Verhältnis zu mindestens einem anderen Merkmal in die Erzeugung der Produktkennzeichnung einfließt.

Die Veränderung wird von der Verarbeitungseinrichtung gewichtet. Dies hat den Vorteil, dass verschiedene Merkmale mit einer unterschiedlichen Gewichtung in die Erzeugung der Produktkennzeichnung Eingang finden.

Eine weitere vorteilhafte Ausführungsform ist, dass die Verarbeitungseinrichtung zur Erzeugung der Produktkennzeichnung einen Verschlüsselungsalgorithmus verwendet. Hier können alle geeigneten Algorithmen verwendet werden. Beispielhaft ist hier sowohl auf symmetrische, als auch asymmetrische Kodierungsalgorithmen hinzuweisen. Insbesondere asymmetrische Algorithmen haben den Vorteil, dass mittels der öffentlichen und privaten Schlüssel eine sehr sichere Produktkennzeichnung erzielt wird.

Eine weitere vorteilhafte Ausführungsform ist, dass das charakteristische Merkmal ein Merkmal einer Verpackung des Produktes ist. Hier können alle geeigneten Merkmale einer Verpackung verwendet werden, wie z.B. Knicke, Kratzer, Risse, Beschriftungen, Flecken etc. Alternativ ist es auch möglich, dass entsprechende Merkmale des Produktes selbst gewählt werden, z.B. Beschriftungen von Tablettenverpackungen.

Eine weitere vorteilhafte Ausführungsform ist, dass das charakteristische Merkmal ein Sicherheitsmerkmal des Produktes ist. Sicherheitsmerkmale eignen sich für das vorliegende Verfahren sehr gut, da sie leicht zu finden sind, d.h. sie haben eine hohe Positioniergenauigkeit. Ferner bieten Sicherheitsmerkmale sogenannte Zufallsstrukturen an, welche bei der Herstellung oder der Verwendung des Sicherheitsmerkmals auftreten. Die Zufallsstrukturen weisen verschiedene Längen- und/oder Größenskalen auf, z.B. Verän derungen eines Druck- oder Prägewerkzeugs, Verschiebung zwischen Prägung und Druck, Variationen der Papierstruktur, etc.

Als vorteilhafte Beispiele für eine physikalische Form des charakteristischen Merkmals sind Prägung und/ oder Druck des Sicherheitsmerkmals zu nennen. Neben Prägung und Druck ist als eine weitere vorteilhafte Ausführungsform eine bestimmte Beschaffenheit der Oberfläche zu nennen, z.B. Rauhigkeit. Andere vorteilhafte physikalische Formen sind eine optische Form, z.B. in Form eines Hologramms, oder eine elektrische Form, z.B. in Form einer bestimmten Leitfähigkeit bzw. eines bestimmten Widerstands eines Bereiches.

Eine weitere vorteilhafte Ausführungsform ist, dass das charakteristische Merkmal eine Materialzusammensetzung des Sicherheitsmerkmals ist. Hier ist vorteilhaft, das neben den oben genannten physikalischen Eigenschaften eines Merkmals auch die chemischen Eigenschaften, d.h. die Materialzusammensetzung, als Merkmal erfasst werden durch geeignete Messverfahren, z.B. der pH-Wert einer Oberfläche.

Eine weitere vorteilhafte Ausführungsform ist, dass die erzeugte Produktkennzeichnung mittels einer Kennzeichnungseinrichtung auf dem Produkt und/oder der Verpackung des Produktes aufgebracht wird. Nach Erzeugung der Produktkennzeichnung ist es sinnvoll, dass die Produktkennzeichnung unmittelbar auf das Produkt und/oder die Verpackung aufgebracht wird. Als übliche Verfahren sind hier das Druckverfahren oder das Laserverfahren zu nennen. Es sind aber auch alle anderen geeigneten Verfahren zum Aufbringen einer Kennzeichnung möglich.

Eine weitere vorteilhafte Ausführungsform ist, dass als Produktkennzeichnung ein Code erzeugt wird. Hier gibt es viele verschiedene geeignete Formen eines Codes, z.B. ein Zahlencode, ein- oder mehrdimensionale Codes etc. Vorteilhafterweise sind diese Codes maschinell einlesbar.

Die Erfindung offenbart ferner ein Verfahren zum Prüfen einer auf einem Produkt aufgebrachten Produktkennzeichnung gemäß den vorher beschriebenen Ausführungsformen, wobei die Produktkennzeichnung ohne Verbindung zu einer Datenbank allein mit dem Produkt prüfbar ist, wobei mittels einem Prüfgerät, welches mittels einer Erfassungseinrichtung mindestens eine dauerhafte, statistisch verteilte, physikalische und/ oder chemische Veränderung des Produktes und die auf dem Produkt aufgebrachte Produktkennzeichnung erfasst und mittels einer Verarbeitungseinrichtung eine Produktkennzeichnung aus der erfassten Veränderung erzeugt und mittels einer Vergleichseinrichtung die erzeugte Produktkennzeichnung mit der auf dem Produkt aufgebrachten Produktkennzeichnung vergleicht, um festzustellen ob es sich bei Übereinstimmung zwischen erzeugter und erfasster Produktkennzeichnung um ein originales Produkt handelt.

Die Erfindung offenbart ferner eine Vorrichtung zum Erzeugen einer Produktkennzeichnung und zum Kennzeichnen eines Produktes mit der Produktkennzeichnung gemäß den vorher beschriebenen Ausführungsformen, wobei die Produktkennzeichnung ohne Verbindung zu einer Datenbank allein mit dem Produkt prüfbar ist, wobei die Vorrichtung eine Erfassungseinrichtung umfasst, um mindestens eine dauerhafte, statistisch verteilte, physikalische und/ oder chemische Veränderung des Produktes zu erfassen und eine Verarbeitungseinrichtung umfasst, um die Produktkennzeichnung aus der erfassten Veränderung zu erzeugen und eine Kennzeichnungseinrichtung umfasst, um die Produktkennzeichnung auf dem Produkt aufzubringen. Dies hat den Vorteil, dass die Erzeugung und die Kennzeichnung in einer Vorrichtung bzw. einem Gerät statt findet. Üblicherweise werden solche Geräte bei Herstellern von Produkten, wie z.B. Arzneimittelhersteller, betrieben. Wichtig ist, dass sich diese Geräte ohne großen Aufwand in die bestehende Fertigungsstrassen und Infrastruktur einbinden lassen, ohne dass große Änderungen notwendig sind, da diese Geräte auf genormte und standardisierte Schnittstellen auf Seiten der Hardware als auch der Software zurück greifen.

Die Erfindung offenbart ferner eine Vorrichtung zum Prüfen einer auf einem Produkt aufgebrachten Produktkennzeichnung gemäß den vorher beschriebenen Ausführungsbeispielen, wobei die Produktkennzeichnung ohne Verbindung zu einer Datenbank allein mit dem Produkt prüfbar ist, wobei die Vorrichtung eine Erfassungseinrichtung umfasst, um mindestens eine dauerhafte, statistisch verteilte, physikalische und/oder chemische Veränderung des Produktes und die auf dem Produkt aufgebrachte Produktkennzeichnung zu erfassen und eine Verarbeitungseinrichtung umfasst, um eine Produktkennzeichnung aus der erfassten Veränderung zu erzeugen und eine Vergleichseinrichtung umfasst, um die erzeugte Produktkennzeichnung mit der auf dem Produkt aufgebrachten Produktkennzeichnung zu vergleichen, um festzustellen, ob es sich bei Übereinstimmung zwischen erzeugter und erfasster Produktkennzeichnung um ein originales Produkt handelt. Vorteilhaft an solchen tragbaren Vorrichtungen oder Geräten ist, dass mit ihnen mobil, z.B. unmittelbar vor einem Regal im Supermarkt oder bei einer Kontrolle einer Lastwagenladung unmittelbar am Produkt festgestellt werden kann, ob es sich hier um eine Fälschung oder ein Original handelt. Die Geräte haben eine eigene Energieversorgung und können ohne Datenverbindung zu einem Hintergrundsystem Produkte auf ihre Echtheit prüfen. Die Geräte sind in der Lage die Produktkennzeichnung und die Veränderungen zu erfassen, wobei es vorteilhaft ist, dass die Veränderungen spezifiziert sind. Optional können diese Geräte eine zusätzliche Schnittstelle aufweisen, um eine Verbindung zu einem Hintergrundsystem aufzunehmen. Dies kann eine kontaktlose oder eine kontaktgebundene Schnittstelle sein.

Im Folgenden soll ein praktisches Ausführungsbeispiel beschrieben werden.

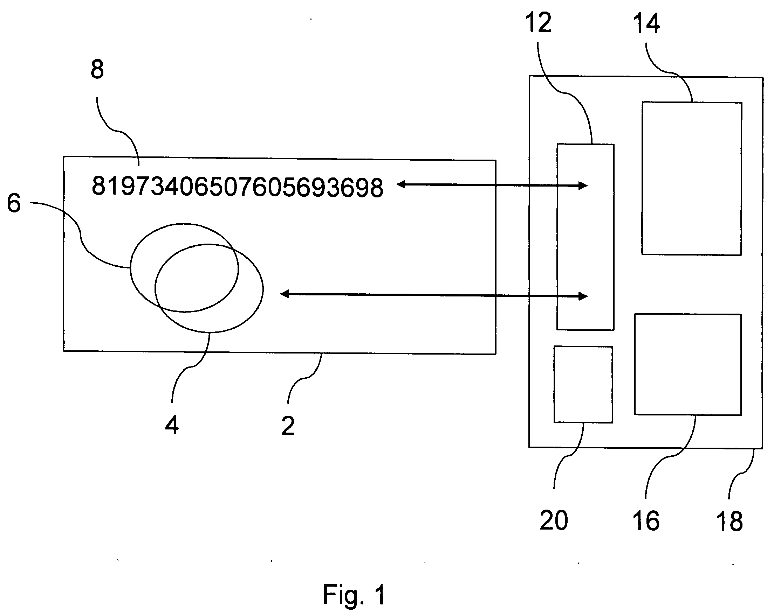

Figur 1 zeigt das Prinzip der Erfindung beim Prüfen einer Produktkennzeichnung.

Figur 1 zeigt ein Produkt 2, das eine Produktkennzeichnung 8 aus einem Zahlencode mit 20 Stellen und ein Sicherheitsmerkmal, das aus einem Druck 4 und einer Prägung 6 besteht, aufweist. Ferner wird in Figur 1 eine tragbare Vorrichtung 18 zum Prüfen der Produktkennzeichnung 8 offenbart. Die Vorrichtung 18 weist eine Erfassungseinrichtung 12 auf, um die Produktkennzeichnung 8 und um mindestens eine dauerhafte, statistisch verteilte, physikalische und/ oder chemische Veränderung des Produktes 2, hier eine Abweichung zwischen Druck 4 und Prägung 6, zu erfassen. Ferner weist die Vorrichtung 18 eine Verarbeitungseinrichtung 16 auf, um eine Produktkennzeichnung aus der erfassten Veränderung zu erzeugen, und eine Vergleichseinrichtung 14 auf, um die erzeugte Produktkennzeichnung mit der auf dem Produkt aufgebrachten Produktkennzeichnung 8 zu vergleichen, um festzustellen, ob es sich bei Übereinstimmung zwischen erzeugter und erfasster Produktkennzeichnung 8 um ein originales Produkt 2 handelt. Das Ergebnis dieses Vergleichs, ob ein Original oder eine Fälschung vorliegt, wird auf einer Anzeigeeinrichtung 20 dargestellt.

Die Produktkennzeichnung 8 wird in der Regel beim Hersteller des Produktes 2 erzeugt. Dazu wird mittels einer Erfassungseinrichtung mindestens eine dauerhafte, statistisch verteilte, physikalische und/oder chemische Veränderung des Produktes erfasst wird und mittels einer Verarbeitungseinrichtung eine Produktkennzeichnung aus der erfassten Veränderung erzeugt.

Als Veränderung wird mindestens ein charakteristisches Merkmal des Produktes erfasst. Alternativ ist es auch möglich, dass als Veränderung ein Verhältnis von mindestens zwei verschiedenen charakteristischen Merkmalen erfasst wird.

Die erfasste Veränderung wird in einer Verarbeitungseinheit beim Hersteller, z.B. einem Computer, bei Bedarf gewichtet, bevor sie mit möglicherweise anderen Veränderungen zu einer Produktkennzeichnung 8 verarbeitet wird.

Zur Erhöhung der Sicherheit bietet sich an, dass zur Erzeugung der Produktkennzeichnung 8 ein Verschlüsselungsalgorithmus verwendet wird, wie sie z.B. von der symmetrischen und/oder asymmetrischen Verschlüsselung bekannt sind.

Typischerweise wird als charakteristisches Merkmal ein Merkmal einer Verpackung des Produktes verwendet. Eine andere Möglichkeit ist die, dass als charakteristisches Merkmal ein Sicherheitsmerkmal eines Produktes, z.B. ein Bild, ein Hologramm, etc., verwendet wird. Als Sicherheitsmerkmal sind ein Druck und eine Prägung sehr gut geeignet, da sie sich gut mit z.B. einer Kamera erfassen lassen.

Neben diesen physikalischen Merkmalen sind auch chemische Merkmale als charakteristisches Merkmal möglich. Beispielsweise ist das charakteristische Merkmal eine Materialzusammensetzung eines Sicherheitsmerkmals oder ein pH-Wert auf der Oberfläche einer Verpackung des Produktes.

Nach der Erzeugung der Produktkennzeichnung wird diese gewöhnlich auf dem Produkt selbst und/ oder seiner Verpackung mittels einer Kennzeichnungseinrichtung aufgebracht, z.B. mittels Druck, Laser, Gravur etc.

In der Praxis sind zur Erzeugung der Produktkennzeichnung 8 die Erfassungseinrichtung 12, Verarbeitungseinrichtung 16 und Kennzeichnungseinrichtung 18 oft in einem Gerät vereinigt.

Die Produktkennzeichnung 8 ist beispielsweise ein Code. In der Praxis sind alle geeigneten Codes möglich, wie z.B. ein- und/oder mehrdimensionale Codes, Barcodes, Zahlencodes etc. Sinnvoll ist, dass der Code maschinenlesbar ist. Die Produktkennzeichnung kann beispielsweise ganz oder nur teilweise aus dem erzeugten Code bestehen. Beispielsweise können von einem 20 stelligen Code nur zehn Stellen aus dem erzeugten Code bestehen.

Die Prüfung der Produktkennzeichnung verläuft wie bei der Erzeugung, so wie dies oben bei der Beschreibung zu Figur 1 offenbart ist.

Zur Prüfung der Produktkennzeichnung 8 sind die Erfassungseinrichtung 12, Vergleichseinrichtung 14, Verarbeitungseinrichtung 16 und die Anzeigeeinrichtung 20 in einem Gerät, welches stationär oder mobil sein kann, integriert. Allgemein gilt, dass die Vergleichseinrichtung 14 und die Verarbeitungseinrichtung 16 in einem Mikroprozessor vereinigt sein können.

Wesentlich für die Erfindung und alle Ausführungsbeispiele ist, dass die Produktkennzeichnung 8 immer ohne Verbindung zu einer Datenbank allein mit dem Produkt 2 prüfbar ist.

## Patentansprüche

1. Verfahren zum Erzeugen einer Produktkennzeichnung (8), wobei die Produktkennzeichnung (8) ohne Verbindung zu einer Datenbank allein mit dem Produkt (2) prüfbar ist, wobei
∘ mittels einer Erfassungseinrichtung (12) mindestens eine dauerhafte, statistisch verteilte, physikalische und/ oder chemische Veränderung des Produktes (2) erfasst wird und
∘ mittels einer Verarbeitungseinrichtung (16) eine Produktkennzeichnung (8) aus der erfassten Veränderung erzeugt wird,
wobei als Veränderung mindestens zwei charakteristische Merkmale des Produkts (2) erfasst werden, und
als Veränderung ein Verhältnis von mindestens zwei verschiedenen charakteristischen Merkmalen erfasst wird,
**dadurch gekennzeichnet, dass** die Veränderung von der Verarbeitungseinrichtung (16) gewichtet wird, indem verschiedene Merkmale mit einer unterschiedlichen Gewichtung in die Erzeugung der Produktkennzeichnung Eingang finden.

2. Verfahren nach Anspruch 1, **dadurch gekennzeichnet, dass** die Verarbeitungseinrichtung (16) zur Erzeugung der Produktkennzeichnung (8) einen Verschlüsselungsalgorithmus verwendet.

3. Verfahren nach Anspruch 2, **dadurch gekennzeichnet, dass** das charakteristische Merkmal ein Merkmal einer Verpackung des Produktes (2) ist.

4. Verfahren nach Anspruch 2, **dadurch gekennzeichnet, dass** das charakteristische Merkmal ein Sicherheitsmerkmal des Produktes (2) ist.

5. Verfahren nach Anspruch 4, **dadurch gekennzeichnet, dass** das charakteristische Merkmal eine Prägung (6) des Sicherheitsmerkmals ist.

6. Verfahren nach Anspruch 4, **dadurch gekennzeichnet, dass** das charakteristische Merkmal ein Druck (2) des Sicherheitsmerkmals ist.

7. Verfahren nach Anspruch 4, **dadurch gekennzeichnet, dass** das charakteristische Merkmal eine Materialzusammensetzung des Sicherheitsmerkmals ist.

8. Verfahren nach einem der vorher gehenden Ansprüche, **dadurch gekennzeichnet, dass** die erzeugte Produktkennzeichnung (8) mittels einer Kennzeichnungseinrichtung auf dem Produkt (2) und/ oder der Verpackung des Produktes (2) aufgebracht wird.

9. Verfahren nach einem der vorher gehenden Ansprüche, **dadurch gekennzeichnet, dass** als Produktkennzeichnung (8) ein Code erzeugt wird.

10. Verfahren zum Prüfen einer auf einem Produkt (2) aufgebrachten Produktkennzeichnung (8), wobei die Produktkennzeichnung (8) mittels eines Verfahrens gemäß den Ansprüchen 1 bis 9 erzeugt wird, wobei die Produktkennzeichnung (8) ohne Verbindung zu einer Datenbank allein mit dem Produkt (2) prüfbar ist, **dadurch gekennzeichnet, dass** mittels eines Prüfgeräts (18), welches
∘ mittels einer Erfassungseinrichtung (12) mindestens eine dauerhafte, statistisch verteilte, physikalische und/ oder chemische Veränderung des Produktes (2) und die auf dem Produkt (2) aufgebrachte Produktkennzeichnung (8) erfasst, wobei als Veränderung ein Verhältnis von zwei verschiedenen charakteristischen Merkmalen erfasst wird, und
∘ mittels einer Verarbeitungseinrichtung (16) eine Produktkennzeichnung (8) aus der erfassten Veränderung erzeugt, wobei die Verarbeitungseinrichtung (16) eingerichtet ist, um die Veränderung zu gewichten, und
∘ mittels einer Vergleichseinrichtung (14) die erzeugte Produktkennzeichnung (8) mit der auf dem Produkt (2) aufgebrachten Produktkennzeichnung (8) vergleicht, um festzustellen ob es sich bei Übereinstimmung zwischen erzeugter und erfasster Produktkennzeichnung (8) um ein originales Produkt (2) handelt.

11. Vorrichtung zum Erzeugen einer Produktkennzeichnung (8) und Kennzeichnen eines Produktes (2) mit der Produktkennzeichnung (8), wobei die Produktkennzeichnung (8) mittels eines Verfahrens gemäß den Ansprüchen 1 bis 9 erzeugt wird, wobei die Produktkennzeichnung (8) ohne Verbindung zu einer Datenbank allein mit dem Produkt (2) prüfbar ist, **dadurch gekennzeichnet, dass** die Vorrichtung
∘ eine Erfassungseinrichtung (12) umfasst, um mindestens eine dauerhafte, statistisch verteilte, physikalische und/oder chemische Veränderung des Produktes (2) zu erfassen, wobei als Veränderung ein Verhältnis von zwei verschiedenen charakteristischen Merkmalen erfasst wird, und
∘ eine Verarbeitungseinrichtung (16) umfasst, um die Produktkennzeichnung (8) aus der erfassten Veränderung zu erzeugen, wobei die Verarbeitungseinrichtung (16) eingerichtet ist, um die Veränderung zu gewichten, indem verschiedene Merkmale mit einer unterschiedlichen Gewichtung in die Erzeugung der Produktkennzeichnung Eingang finden, und
∘ eine Kennzeichnungseinrichtung umfasst, um die Produktkennzeichnung (8) auf dem Produkt (2) aufzubringen.

12. Vorrichtung (18) zum Prüfen einer auf einem Produkt (2) aufgebrachten Produktkennzeichnung (8), wobei die Produktkennzeichnung (8) mittels eines Verfahrens gemäß den Ansprüchen 1 bis 9 erzeugt wird, wobei die Produktkennzeichnung (8) ohne Verbindung zu einer Datenbank allein mit dem Produkt (2) prüfbar ist, **dadurch gekennzeichnet, dass** die Vorrichtung (18)
∘ eine Erfassungseinrichtung (12) umfasst, um mindestens eine dauerhafte, statistisch verteilte, physikalische und/ oder chemische Veränderung des Produktes (2) und die auf dem Produkt (2) aufgebrachte Produktkennzeichnung (8) zu erfassen, wobei als Veränderung ein Verhältnis von zwei verschiedenen charakteristischen Merkmalen erfasst wird, und
∘ eine Verarbeitungseinrichtung (16) umfasst, um eine Produktkennzeichnung (8) aus der erfassten Veränderung zu erzeugen, wobei die Verarbeitungseinrichtung (16) eingerichtet ist, um die Veränderung zu gewichten, indem verschiedene Merkmale mit einer unterschiedlichen Gewichtung in die Erzeugung der Produktkennzeichnung Eingang finden, und
∘ eine Vergleichseinrichtung (14) umfasst, um die erzeugte Produktkennzeichnung (8) mit der auf dem Produkt (2) aufgebrachten Produktkennzeichnung (8) zu vergleichen, um festzustellen, ob es sich bei Übereinstimmung zwischen erzeugter und erfasster Produktkennzeichnung (8) um ein originales Produkt (2) handelt.

## Claims

1. A method for producing a product identification (8), wherein the product identification (8) can be checked without a connection to a database with the product (2) alone, wherein
• by means of a detection device (12) at least one permanent, statistically distributed, physical and/or chemical change of the product (2) is detected and
• by means of a processing device (16) a product identification (8) is produced from the detected change,
wherein as a change at least two characteristic features of the product (2) are detected, and as a change a ratio of at least two different characteristic features is detected, **characterized in that** the change is weighted by the processing device (16) by incorporating different features with a different weighting in the production of the product identification.

2. The method according to claim 1, **characterized in that** the processing device (16) employs an encryption algorithm for producing the product identification (8).

3. The method according to claim 2, **characterized in that** the characteristic feature is a feature of a packaging of the product (2).

4. The method according to claim 2, **characterized in that** the characteristic feature is a security feature of the product (2).

5. The method according to claim 4, **characterized in that** the characteristic feature is an embossing (6) of the security feature.

6. The method according to claim 4, **characterized in that** the characteristic feature is a print (2) of the security feature.

7. The method according to claim 4, **characterized in that** the characteristic feature is a material composition of the security feature.

8. The method according to any of the preceding claims, **characterized in that** the produced product identification (8) is applied to the product (2) and/or the packaging of the product (2) by means of a marking device.

9. The method according to any of the preceding claims, **characterized in that** as product identification (8) a code is produced.

10. A method for checking a product identification (8) applied to a product (2), wherein the product identification (8) is produced by means of a method according to the claims 1 to 9, wherein the product identification (8) can be checked without a connection to a database with the product (2) alone, **characterized in that** by means of a checking device (18), which
• by means of a detection device (12) detects at least one permanent, statistically distributed, physical and/or chemical change of the product (2) and the product identification (8) applied to the product (2), wherein as a change a ratio of two different characteristic features is detected, and
• by means of a processing device (16) produces a product identification (8) from the detected change, wherein the processing device (16) is adapted to weight the change, and
• by means of a comparing device (14) compares the produced product identification (8) with the product identification (8) applied to the product (2) to determine whether, when the produced product identification (8) matches the detected one, the product (2) is an original product.

11. An apparatus for producing a product identification (8) and marking a product (2) with the product identification (8), wherein the product identification (8) is produced by means of a method according to the claims 1 to 9, wherein the product identification (8) can be checked without a connection to a database with the product (2) alone, **characterized in that** the apparatus
• includes a detection device (12) for detecting at least one permanent, statistically distributed, physical and/or chemical change of the product (2), wherein as a change a ratio of two different characteristic features is detected, and
• includes a processing device (16) for producing the product identification (8) from the detected change, wherein the processing device (16) is adapted to weight the change by incorporating different features with a different weighting in the production of the product identification (8), and
• includes a marking device for applying the product identification (8) to the product (2).

12. An apparatus (18) for checking a product identification (8) applied to a product (2), wherein the product identification (8) is produced by means of a method according to the claims 1 to 9, wherein the product identification (8) can be checked without a connection to a database with the product (2) alone, **characterized in that** the apparatus (18)
• includes a detection device (12) for detecting at least one permanent, statistically distributed, physical and/or chemical change of the product (2) and the product identification (8) applied to the product (2), wherein as a change a ratio of two different characteristic features is detected, and
• includes a processing device (16) for producing a product identification (8) from the detected change, wherein the processing device (16) is adapted to weight the change by incorporating different features with a different weighting in the production of the product identification, and
• includes a comparing device (14) for comparing the produced product identification (8) with the product identification (8) applied to the product (2), to determine whether, when the produced product identification (8) matches the detected one, the product (2) is an original product.

## Revendications

1. Procédé de génération d'un marquage de produit (8), le marquage de produit (8) pouvant être contrôlé sans liaison avec une banque de données, uniquement avec le produit (2), cependant que
∘ au moyen d'un dispositif de saisie (12), au moins une modification physique et/ou chimique durable du produit (2) répartie statistiquement est saisie et
∘ au moyen d'un équipement de traitement (16), un marquage de produit (8) est généré à partir de la modification saisie,
cependant que, en tant que modification, au moins deux caractéristiques distinctives du produit (2) sont saisies, et
en tant que modification, un rapport d'au moins deux caractéristiques distinctives différentes est saisi,
**caractérisé en ce que** la modification est pondérée par l'équipement de traitement (16), ce qui a lieu **en ce que** différentes caractéristiques sont prises en compte avec une pondération différente dans la génération du marquage de produit.

2. Procédé selon la revendication 1, **caractérisé en ce que** l'équipement de traitement (16) utilise, pour la génération du marquage de produit (8), un algorithme de chiffrement.

3. Procédé selon la revendication 2, **caractérisé en ce que** la caractéristique distinctive est une caractéristique d'un emballage du produit (2).

4. Procédé selon la revendication 2, **caractérisé en ce que** la caractéristique distinctive est une caractéristique de sécurité du produit (2).

5. Procédé selon la revendication 4, **caractérisé en ce que** la caractéristique distinctive est une gaufrure (6) de la caractéristique de sécurité.

6. Procédé selon la revendication 4, **caractérisé en ce que** la caractéristique distinctive est une impression (2) de la caractéristique de sécurité.

7. Procédé selon la revendication 4, **caractérisé en ce que** la caractéristique distinctive est une composition du matériau de la caractéristique de sécurité.

8. Procédé selon une des revendications précédentes, **caractérisé en ce que** le marquage de produit (8) généré est appliqué au moyen d'un équipement de marquage sur le produit (2) et/ou sur l'emballage du produit (2).

9. Procédé selon une des revendications précédentes, **caractérisé en ce que**, en tant que marquage de produit (8), un code est généré.

10. Procédé de contrôle d'un marquage de produit (8) appliqué sur un produit (2), le marquage de produit (8) étant généré au moyen d'un procédé selon les revendications de 1 à 9, le marquage de produit (8) pouvant être contrôlé sans liaison avec une banque de données, uniquement avec le produit (2), **caractérisé en ce que**, au moyen d'un appareil de contrôle (18) qui
∘ au moyen d'un équipement de saisie (12), saisit au moins une modification physique et/ou chimique durable du produit (2) répartie statistiquement ainsi que le marquage de produit (8) appliqué sur le produit (2), cependant que, en tant que modification, un rapport de deux caractéristiques distinctives différentes est saisi, et
∘ au moyen d'un équipement de traitement (16), un marquage de produit (8) est généré à partir de la modification saisie, cependant que l'équipement de traitement (16) est conçu pour pondérer la modification, et
∘ au moyen d'un équipement de comparaison (14), le marquage de produit (8) généré est comparé avec le marquage de produit (8) appliqué sur le produit (2) afin de constater si, en cas de concordance entre marquage de produit (8) généré et marquage de produit saisi, il s'agit d'un produit (2) original.

11. Dispositif de génération d'un marquage de produit (8) et d'identification d'un produit (2) par le marquage de produit (8), le marquage de produit (8) étant généré au moyen d'un procédé selon les revendications de 1 à 9, le marquage de produit (8) pouvant être contrôlé sans liaison avec une banque de données, uniquement avec le produit (2), **caractérisé en ce que** le dispositif
∘ comprend un équipement de saisie (12) pour saisir au moins une modification physique et/ou chimique durable du produit (2) répartie statistiquement, cependant que, en tant que modification, un rapport de deux caractéristiques distinctives différentes est saisi, et
∘ comprend un équipement de traitement (16) pour générer le marquage de produit (8) à partir de la modification saisie, cependant que l'équipement de traitement (16) est conçu pour pondérer la modification, ce qui a lieu **en ce que** différentes caractéristiques sont prises en compte avec une pondération différente dans la génération du marquage de produit, et
∘ comprend un équipement de marquage pour appliquer le marquage de produit (8) sur le produit (2).

12. Dispositif (18) de contrôle d'un marquage de produit (8) appliqué sur un produit (2), le marquage de produit (8) étant généré au moyen d'un procédé selon les revendications de 1 à 9, le marquage de produit (8) pouvant être contrôlé sans liaison avec une banque de données, uniquement avec le produit (2), **caractérisé en ce que** le dispositif (18)
∘ comprend un équipement de saisie (12) pour saisir au moins une modification physique et/ou chimique durable du produit (2) répartie statistiquement ainsi que le marquage de produit (8) appliqué sur le produit (2), cependant que, en tant que modification, un rapport de deux caractéristiques distinctives différentes est saisi, et
∘ comprend un équipement de traitement (16) pour générer un marquage de produit (8) à partir de la modification saisie, cependant que l'équipement de traitement (16) est conçu pour pondérer la modification, ce qui a lieu **en ce que** différentes caractéristiques sont prises en compte avec une pondération différente dans la génération du marquage de produit, et
∘ comprend un équipement de comparaison (14) pour comparer le marquage de produit (8) généré avec le marquage de produit (8) appliqué sur le produit (2), afin de constater si, en cas de concordance entre marquage de produit (8) généré et marquage de produit saisi, il s'agit d'un produit (2) original.
